**Europäisches Patentamt**

**European Patent Office** .

**Office européen des brevets**

(19)

(11) Veröffentlichungsnummer : **0 168 746**
**B1**

(12) **EUROPÄISCHE PATENTSCHRIFT**

(45) Veröffentlichungstag der Patentschrift :
30.08.89

(51) Int. Cl.⁴ : **F 41 H  5/04**, B 32 B  7/12,
B 32 B  3/14

(21) Anmeldenummer : **85108448.3**

(22) Anmeldetag : **08.07.85**

(54) **Geschosshemmendes Flächengebilde.**

(30) Priorität : 18.07.84 DE 3426457

(43) Veröffentlichungstag der Anmeldung :
22.01.86 Patentblatt 86/04

(45) Bekanntmachung des Hinweises auf die Patenterteilung : 30.08.89 Patentblatt 89/35

(84) Benannte Vertragsstaaten :
AT BE CH DE FR GB IT LI NL SE

(56) Entgegenhaltungen :
DE—A— 2 659 727
DE—A— 2 927 653
FR—A— 1 604 806
GB—A— 1 142 689
US—A— 3 671 374

(73) Patentinhaber : Val. Mehler AG
Edelzellerstrasse
D-6400 Fulda (DE)

(72) Erfinder : Neidhardt, Helmut, Dr.
Eduard-Göbel-Strasse 6
D-6400 Fulda (DE)
Erfinder : Faust, Josef
Schlitzer Strasse 44
D-6427 Bad Salzschlirf (DE)
Erfinder : Dietz, Brigitte, geb. Seufert
Schlitzer Strasse 81
D-6400 Fulda (DE)

(74) Vertreter : Görtz, Dr. Fuchs, Dr. Luderschmidt Patentanwälte
Sonnenberger Strasse 100 Postfach 26 26
D-6200 Wiesbaden (DE)

EP 0 168 746 B1

## Beschreibung

Die Erfindung betrifft ein geschoßhemmendes Flächengebilde mit einem textilen Laminat entsprechend dem Oberbegriff des Anspruchs 1.

Flächengebilde der eingangs erwähnten Art (DE-A-2 927 653, insbesondere schußsichere Westen, Schilde, Panzerplatten u. dgl. sollen Geschosse mit hoher Energie aufhalten, wobei das eingesetzte Schutzpaket eine möglichst geringe Dicke bzw. ein möglichst geringes Gewicht aufweisen soll. Da die Rückhaltefähigkeit derartiger Flächengebilde im wesentlichen auf die Oberflächenhärte der Schutzflächen zurückzuführen ist, wurden in erster Linie Spezialstähle mit hoher Härte und entsprechend abgestimmter Zähigkeit sowie hochgehärtete keramische Werkstoffe eingesetzt.

So wurden beispielsweise Keramik- oder Stahlplatten in entsprechend ausgebildete Taschen einer schußsicheren Weste eingelegt, um deren Rückhaltefähigkeit noch zu verbessern, oder Schichtstoffanordnungen gebildet, die derartige hochgehärtete Werkstoffe aufweisen (vgl. DE-OSen 27 59 193, 28 15 582). Andererseits wurden jedoch aber auch bereits vorhandene Metallplatten mit textilen Schichten, insbesondere aus Aramidfäden, hinterlegt, die untereinander verbunden waren, beispielsweise durch Tränkung mit Bindemitteln oder durch Vernähen (vgl. DE-OS 31 19 786).

Bei den eingesetzten Stahlsorten ist zunächst zu bemerken, daß sie im Verhältnis zur Halteleistung das höchste Gewicht aufweisen, während keramische Massen hoher Härte bezüglich des Gewichts deutlich günstiger sind. Innerhalb dieser keramischen Massen gibt es ferner Unterschiede, die durch das unterschiedliche spezifische Gewicht bedingt sind. Beispiele für derartige keramische Massen sind Aluminiumoxid, Siliziumcarbid, Borcarbid, Siliziumnitrid und Bornitrid.

Wenn in einigen Fällen Stahl trotz des hohen Gewichts für die Panzerung gegen Geschosse Anwendung findet, so im wesentlichen deshalb, weil bei der Reflexion des Geschosses durch die Härte und Elastizität des Stahls nur geringfügige Schädigungen am Panzerungsmaterial auftreten, so daß folgende Treffer im Abstand von nur wenigen Millimetern zum vorherigen Treffer wiederum gehalten werden können.

Bei keramischen Werkstoffen ist dies jedoch völlig anders. Hier ist es zwar möglich, den ersten Treffer durch eine Schutzschicht von sehr geringem Gewicht im Vergleich zu Stahl zu halten, jedoch zerstört jeder Treffer in den keramischen Massen eine relativ große Fläche, so daß der nächste Treffer mit Sicherheit nur dann gehalten werden kann, wenn er auf ein vom zuerst getroffenen Keramikstück unabhängiges, d. h. separat aufgebrachtes Keramikstück auftrifft. Diese Tatsache führt im allgemeinen dazu, daß keramische Werkstoffe, wenn die Forderung nach einem vertretbaren Geschoßabstand von etwa 40-80 mm untereinander aufgestellt wird, nur in verhältnismäßig kleinen Keramikelementen, insbesondere Einzelkacheln angewandt werden können.

Dadurch ergibt sich ein weiteres Problem, nämlich wie die Kachelanordnung beschaffen sein muß, damit die zwangsläufig vorhandenen engen Zwischenräume nicht zu Schwachstellen des Gesamtpakets werden.

Bei der Mosaikanordnung von keramischen Kacheln ist es deshalb allein wegen des Kantenproblems trotz einer bekannten Anordnung nach Art eines Verbundmauerwerks immer noch notwendig, eine höhere Dicke und damit ein höheres Gewicht zu verwenden. Nur dadurch kann sichergestellt werden, daß die Kanten nicht zu Problemstellen der Halteleistung werden. Diese höhere Dicke läßt dann das Gesamtgewicht wieder in die Nähe des erforderlichen Stahlgewichts rücken, so daß sich bisher Keramik trotz des anscheinend hervorragenden Gewichtsvorteils gegenüber Stahl nicht völlig durchsetzen konnte.

Weiterhin sind auch andere Werkstoffe, beispielsweise Titan oder Aluminium, anstelle von Stahl — wenn man vom Preis absieht — vorgeschlagen worden. Es zeigt sich jedoch, daß ein Gewichtsvorteil bei diesen Werkstoffen im allgemeinen nicht erreichbar ist, weil das geringere spezifische Gewicht auch eine geringere Halteleistung bedeutet, d. h. für die gleiche Halteleistung eine dem Unterschied im spez. Gewicht meist ziemlich genau proportionale Dickenerhöhung notwendig ist.

Es wurden deshalb bereits Versuche unternommen, um die bei Keramikplatten auftretenden Nachteile der Mosaikanordnung an den Teilungslinien zu kompensieren. So hat man die einzelnen Keramikplatten oder -kacheln auf Unterlagen, beispielsweise metallischem Aluminium, glasfaserverstärkten Kunststoffen oder hartem Sperrholz, aufgeklebt oder auf andere Weise, beispielsweise durch Rahmengerüste, befestigt. Hierdurch wird eine dichtgepreßte Anordnung erhalten, mit der die Geschosse mit einem gegenüber Stahl etwas vorteilhafteren Gesamtgewicht gestoppt werden konnten. Anstelle von Glasfasern in den GFK-Systemen hat man auch Gewebe aus Aramidfäden eingesetzt.

Aus der DE-A- 29 27 653 ist ein solches Aramidgewebelaminat bekannt, das eine Frontschicht aus Metall oder Keramik aufweist. Die einzelnen Aramidgewebelagen sind dabei mit einem ersten thermoplastischen Bindemittel untereinander verbunden, während die harte Frontschicht an das Laminatpaket mit einem elastischen Kleber angeklebt ist. Welche Halteeigenschaften die beiden Kleber aufweisen sollen und wie sich diese Eigenschaften zueinander verhalten sollen, ist nicht erwähnt.

Aus der US-A-36 71 374 ist ein Laminatpaket bekannt, das eine harte Frontschicht aufweisen soll, wobei diese Schicht mit dem Laminatpaket über eine flexible Klebemittelschicht verbunden ist. Zwar wird auf einsetzbare Klebemittel hingewiesen, jedoch nicht ausgeführt, welche Haftfestigkeit die Bindemittel im Laminatpaket und in der Klebemittelschicht aufweisen sollen. Somit fehlt es an einem Hinweis, wie ein optimaler Verbund aufgebaut sein soll.

Die FR-A-16 04 806 beschreibt ein geschoßhemmendes Flächengebilde, das aus einem Keramikmaterial besteht, das jeweils auf seiner Vorderseite und seiner Rückseite Harze aufweisen soll, wobei das auf der Rückseite befindliche Harz härter, jedoch weniger flexibler ist als das auf der Vorderseite befindliche zweite Harz. Eine derartige Anordnung ist insofern nachteilig, als beim Auftreffen eines Projektils die benachbarten Kacheln durch die Druck- und Delaminationswirkung von der Laminatoberfläche gerissen werden, somit also der Schutzeffekt der gesamten Anordnung erheblich verschlechtert wird.

Bei der Kombination einer durchgehenden Unterlage aus beispielsweise Stahl, Aluminium, GFK-Werkstoffen oder Einbettungen von Geweben aus Aramidfäden, die mit Epoxyharz- oder Polyesterharzmassen getränkt sind, mit einer darauf befestigten Schicht von Keramik-Mosaik-Kacheln beruht die Wirkungsweise der Aufhaltung der Geschosse vor allen darauf, daß die harte Keramikoberfläche zu einer Geschoßverformung (bei Weichkerngeschossen) oder Geschoßzerlegung (bei Hartkerngeschossen) führt und die sich an die Keramikschicht anschließenden Unterlagen geeignet sind, die deformierten Geschosse oder die verbliebenen Bruchstücke zurückzuhalten.

Bei den geschoßhemmenden Flächenanordnungen des Standes der Technik waren jedoch die Rückhalteleistungen nicht zufriedenstellend, weil die Gewichtsersparnis im vergleich zum Stahl den Nachteil der schlechten Leistung bei geringem Trefferabstand nlcht aufwog. Es lösen sich beim Auftreffen eines Geschosses auf eine Keramikfront Kacheln aus der Verbundanordnung, was durch die Dilatation der Auftreffenergie verursacht worden ist. Demzufolge hielt eine derartige Anordnung häufig nur einen Schuß, da eine Vielzahl von Kacheln von der geschoßhemmenden Unterschicht abplatzten, was — wie vorstehend erläutert — entweder auf die Verschiebung der Kacheln selbst oder aber auf den Abriß der Basisschicht von den Kacheln zurückzuführen war.

Der Erfindung liegt daher die Aufgabe zugrunde, ein geschoßhemmendes Flächengebilde der eingangs erwähnten Art so fortzubilden, daß bei möglichst geringem Gewicht eine Vielzahl von Schüssen, insbesondere Hartkerngeschossen mit hoher Geschwindigkeit und damit Auftreffenergie, unwirksam gemacht werden kann.

Die Lösung der Aufgabe erfolgt durch die kennzeichnenden Merkmale des Anspruchs 1.

Es wurde nunmehr festgestellt, daß die Kombination aus der metallischen oder keramischen Frontschicht und einem Laminatpaket aus Aramidfäden eine deutliche Verbesserung der Halteleistung bewirkt, wenn die Frontschicht auf die oberste Gewebelage des Laminatpakets mit einem Bindemittel aufgeklebt ist, das eine erheblich höhere Haftfähigkeit aufweist, als das Bindemittel, mit dem die Gewebelagen untereinander verbunden sind.

Dieses Bindemittel bewirkt beim Einsatz von Keramikkacheln, daß die zerstörte Keramikkachel mit ihrer Restmasse auch weiterhin mit der obersten Gewebelage verbunden bleibt, und sich im wesentlichen die umliegenden Kacheln nicht verschieben können. Infolge der hohen Haftfähigkeit fängt also das Bindemittel die bei der Zerstörung der Kacheln auftretenden Kräfte auf und gibt diese insgesamt an die Verbundstruktur des Schutzpakets weiter.

Vorteilhafterweise ist daher zwischen den Kacheln in den Spalten ebenfalls das Bindemittel vorgesehen, das einerseits die Reibung zwischen den Kanten vermindert und andererseits die elastische Übertragung der Kräfte ohne Kachelbruch auf das gesamte Kachelpaket fördert.

Die Gewebelagen im Laminatpaket sind untereinander mit einem weiteren Bindemittel verbunden, das vorteilhafterweise eine geringere Haftfähigkeit als das Bindemittel aufweist, mit dem die Kacheln an der ersten Aramidgewebeschicht gebunden sind. Dies hat zur Folge, daß die Kacheln an der ersten Gewebeschicht haften bleiben, wenn die Delaminationsphase beim Durchtritt des Geschosses durch die Kachelschicht beginnt. Hier durchdringen die auf das Laminatpaket auftreffenden Geschosse die einzelnen Gewebeschichten und zerstören diese teilweise, wenn die Rückhaltekräfte der Faser überschritten werden. Dieser Durchtritt führt zur jeweiligen Ausbeulung der betroffenen Gewebelage und somit üblicherweise zur Ablösung der jeweils betroffenen Gewebelage von der benachbarten Schicht. Da das Bindemittel, das zwischen der Keramikschicht und der ersten Gewebeschicht vorgesehen ist, eine erheblich höhere Haftfähigkeit aufweist, als das Bindemittel, das im Laminatpaket eingesetzt wird, bleiben die Kacheln an der ersten Gewebeschicht bei der Delamination haften, während sich die zweite und folgende Gewebeschichten an der ersten Gewebeschicht ablösen.

Gemäß einer weiteren bevorzugten Ausführungsform ist auch die Unterseite der ersten Gewebeschicht mit dem ersten Bindemittel versehen, so daß gegenüber dem anderen Bindemittel es eine höhere Haftfähigkeit aufweist. Demzufolge wird die Stabilität des Keramikschichtverbundes noch verbessert, da vorteilhafterweise zwei Gewebeflächen nach dem Delaminieren aneinander haften bleiben.

Eine derartige Anordnung hat auch den Vorteil, daß sie sich relativ leicht herstellen läßt, nämlich einerseits aus einem Laminatpaket, auf das bereits eine Aramidgewebelage aufgeklebt ist und andererseits aus einer Keramikschicht. Diese Keramiklage muß dann nur noch auf das Laminatpaket plus Gewebelage aufgeklebt werden, damit das erwünschte fertige Produkt erhalten werden kann.

Weitere Einzelheiten, Merkmale und Vorteile werden anhand der nachfolgenden Beschreibung unter Bezugnahme auf die Zeichnung erläutert.

Es zeigen :

Fig. 1 einen Schnitt durch ein mit einer keramischen Frontplatte versehenes Laminatpaket aus textilem Gewebe, bei dem nur eine Webrichtung zu sehen ist,

Fig. 2 einen vergrößerten Ausschnitt aus dem Schnitt gemäß Fig. 1,

Fig. 3 einen weiteren vergrößerten Ausschnitt einer zweiten Ausführungsform,

Fig. 4 einen ebenfalls vergrößerten Ausschnitt einer dritten Ausführungsform, die auf die Ausführungsform gemäß Fig. 3 zurückgeht, und

Fig. 5 schematisch einen Verbund, der mit den eingesetzten Keramikkacheln hergestellt wurde.

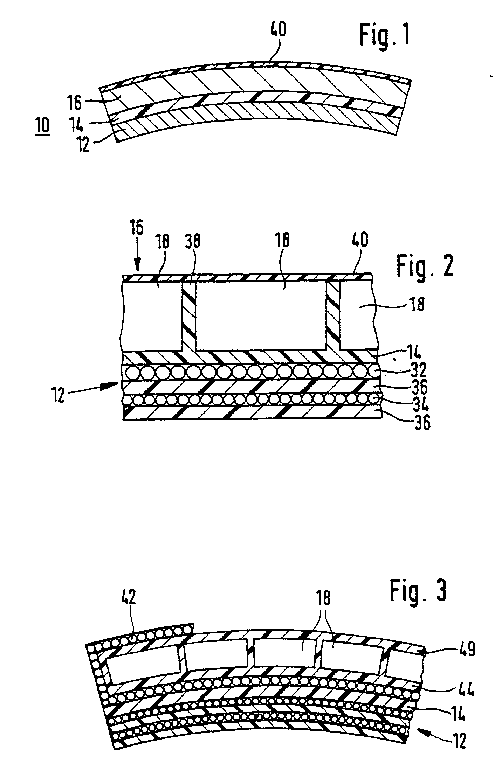

Aus Fig. 1 ist der prinzipielle Aufbau des geschoßhemmenden Flächengebildes 10 ersichtlich. Dieses Flächengebilde 10 besteht im wesentlichen aus einem Laminatpaket 12, das über eine Bindemittelschicht 14 mit einer metallischen oder keramischen Frontschicht 16 verbunden ist.

Als Laminatpaket 12 wird vorteilhafterweise das Laminatpaket eingesetzt, das in der parallelen Patentanmeldung EP-A-169 432 beschrieben und am gleichen Tag hinterlegt worden ist.

Wie aus Fig. 2 ersichtlich ist, besteht die Frontschicht 16 aus einer Vielzahl von Elementen, vorzugsweise den Kacheln 18, sofernvorzugsweise keramische Werkstoffe für die Frontschicht 16 eingesetzt werden. Diese keramischen Werkstoffe bestehen vorteilhafterweise aus Aluminiumoxid, Siliziumdioxid, Siliziumcarbid, Borcarbid, Siliziumnitrid oder Bornitrid. Aus Kostengesichtspunkten setzt man vorteilhafterweise Aluminiumoxid ein, das vorzugsweise einen Reinheitsgrad von 96 % und darüber aufweist.

Andererseits können jedoch aber auch als Frontschicht 16 metallische Teile, beispielsweise Stahlelemente u. dgl. eingesetzt werden, die entweder einstückig sind oder aber eine geteilte Form aufweisen. Vorteilhafterweise wird man hier jedoch eine einstückige Struktur verwenden, da es beim Einsatz von Metallen im allgemeinen zum Durchschuß, nicht jedoch zum Zerplatzen, wie bei keramischen Teilen, kommt.

Aus Gründen des Gewichts ist jedoch der Einsatz von keramischen Materialien für die Herstellung der Frontschicht 16 bevorzugt.

Wie bereits eingangs erwähnt worden ist, werden im Gegensatz zu Stahl bei der Verwendung von Keramik als hartes Gegenmaterial gegen auftreffende Geschosse durch die Geschoßenergie die getroffenen Keramikkacheln jeweils mehr oder weniger zerstört. Insofern muß bei dem mosaikähnlichen Aufbau eines Verbundpakets aus einzelnen Kacheln die Größe dieser Kacheln zum Trefferabstand passend festgelegt werden.

Die Größe der Kacheln wird durch den üblicherweise geforderten Mindestabstand zwischen zwei Schüssen vorgegeben, wobei die Diagonallänge einer Kachel nicht größer ist als der geforderte Mindestabstand. Da dieser Abstand wenigstens etwa 50 mm beträgt, hat sich der Einsatz von Kacheln mit den Abmessungen von etwa 35 × 35

mm bis 40 × 30 mm als zweckmäßig erwiesen, wobei insbesondere die rechteckige Abmessung von 30 × 40 mm besonders vorteilhaft ist.

Eine quadratische Form der Kacheln, die also in Längs- und Querrichtung gleich lang sind, ist weniger bevorzugt, da sich eine versetzte Anordnung nach Art eines Verbundmauerwerks zur Herstellung rechteckiger oder quadratischer Gesamtflächen eines Schutzpakets weniger gut realisieren läßt. Es hat sich nämlich gezeigt, daß die Kachelabmessungen insbesondere im Randbereich nicht zu klein sein dürfen, weil ansonsten die Durchschußwahrscheinlichkeit steigt. Demzufolge muß also eine Kachel dem Geschoß eine bestimmte Masse entgegensetzen, die üblicherweise 25 g, vorteilhafterweise 30 g oder darüber betragen soll. Erfindungsgemäß wird also für kleine Verbundpakete vorzugsweise eine Kachel eingesetzt, die eine Größe von etwa 30 × 40 mm aufweist, wobei die Dicke in Abhängigkeit von der gewünschten Halteleistung gewählt wird. Selbstverständlich können für größere Schutzelemente entsprechend größere Einzelkacheln, z. B. mit Kantenlängen von 200 mm und mehr, eingesetzt werden, sofern die vorgesehenen Mindestabstände mehrerer Treffer untereinander dies zulassen.

Insbesondere im Randbereich würde sich also bei einer halbierten quadratischen Kachel wegen der Herstellung der versetzten Anordnung die Durchschußwahrscheinlichkeit erhöhen, so daß hier nach einer speziellen Lösung gesucht werden mußte.

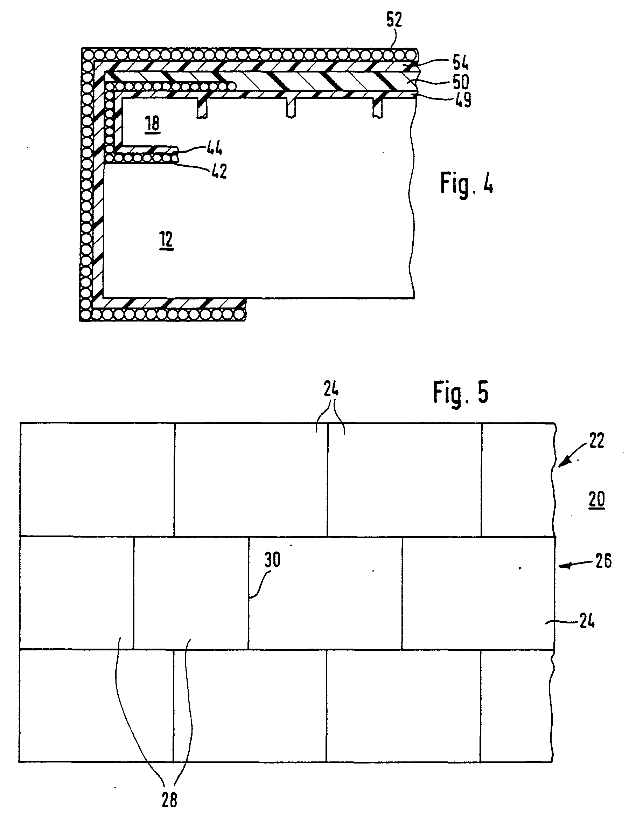

In Fig. 5 ist der vorteilhafte Verbund 20 gezeigt, mit dem das Randproblem gelöst worden ist. Der Verbund 20 weist in der ersten Reihe 22 Kacheln 24 der üblichen Abmessungen, also vorteilhafterweise der Abmessung 30 × 40 mm auf. In der zweiten Reihe 26 werden jedoch im Randbereich zwei Kacheln 28 eingesetzt, deren Länge etwa 3/4 der Länge der Kachel 24 besitzt. Durch den Einsatz einer derartigen Randkachel 28 wird dann noch ein relativ gutes Halteresultat erzielt. Dabei ist eine 3/4-Kachel mit einer Längsabmessung von mindestens 30 mm bevorzugt.

Die Herstellung der versetzten Anordnung ist in Fig. 5 gezeigt und geschieht dann in der Weise, daß in der ersten Reihe 22 die Kachel 24 mit der 1/1-Länge verwendet wird, während in den benachbarten Reihen 26 zwei Randkacheln 28 mit der 3/4-Länge eingesetzt werden, so daß der Rand 30 der zweiten Randkachel 28 etwa in der Mitte der benachbarten Kacheln 24 zu liegen kommt. Hieran können sich dann wieder die üblichen Kacheln 24 anschließen, so daß der gewünschte Verbundaufbau erhalten wird.

Wie aus Fig. 5 ersichtlich ist, treffen sich also in dieser Verbundanordnung lediglich drei Fugen, nicht jedoch vier Fugen an einer Stelle.

Erfindungsgemäß erhalten die verwendeten Kacheln 18, 24, 28 auf dem Laminatpaket 12 an ihrer Berührungsfläche einen exakten Anschluß über die ganze Fläche. Bei einem ebenen Laminatpaket werden demgemäß ebene Kacheln eingesetzt.

Bei einem gekrümmten Laminatpaket, beispielsweise einem monoaxialgekrümmten Laminatpaket, das beispielsweise der Körperform angepaßt ist, können in einer ersten Ausführungsform noch ebene Kacheln eingesetzt werden, sofern die Krümmung nur sehr gering ist. Beim Einsatz von ebenen Kacheln für derart gering gekrümmte Flächen hat sich jedoch der Einsatz von geneigten Kanten als vorteilhaft erwiesen. Derartige Kacheln passen beim Zusammenlegen zu einem Verbund unmittelbar an diesen schrägen Kanten zusammen, so daß quasi ein gekrümmtes Laminatpaket von einem Kachelvieleck umfaßt ist.

In einer besonders bevorzugten Ausführungsform folgt jedoch die eingesetzte Kachel, wie dies Fig. 3 zeigt, exakt der Krümmung des Laminatpakets 12, d. h. die Kachel 18 ist selbst über ihre Gesamtbreite und/oder -länge gekrümmt, so daß ihre Unterseite formschlüssig mit der Oberfläche des Laminatpakets 12 zusammenpaßt. Durch diese genaue Radiusübereinstimmung der Wölbung des Laminatpakets und der Kachelunterseite wird somit eine größtmögliche Berührungsfläche zwischen der Frontschicht 16 und dem Laminatpaket 12 hergestellt, so daß der punktförmig auftretende Druckstoß beim Aufschlag eines Projektils auf die Frontschicht 16 über die gesamte Fläche, beispielsweise einer Kachel 18, aufgefangen werden kann. Somit wird also ein Auseinanderbrechen der Kachel infolge mangelnder Unterstützung der Frontschicht 16 durch das Laminatpaket 12 bei unterschiedlichen Krümmungen sicher vermieden.

Erfindungsgemäß sind die Kacheln 18, 24, 28 über eine Bindemittelschicht 14 mit dem Laminapaket 12 so verbunden, daß die unmittelbar an der Unterseite der Kacheln 18, 24, 28 angeordnete Aramidgewebelage 32 mit der Unterseite der Kacheln 18, 24, 28 wesentlich stärker verbunden ist als mit der angrenzenden Gewebelage 34 (Fig. 2).

Infolgedessen wird als Bindemittel für die Bindemittelschicht 14 ein derartiger Kleber verwendet, der eine hohe Haftung bei elastischem Verbund und eine gute Verankerung der Kacheln 18, 24, 28 aufweist. Dabei soll die Haftfähigkeit des Bindemittels für die Bindemittelschicht 14 erheblich über der Haftfähigkeit des Bindemittels liegen, das für die Herstellung des Laminatpakets 12 eingesetzt worden ist. Dieses zweite Bindemittel ist in Fig. 2 und 3 in den Bindemittelschichten 36 enthalten. Vorteilhafterweise liegt die Haftfähigkeit des Bindemittels für die Bindemittelschicht 14 um wenigstens 50 % über der Haftfähigkeit des Bindemittels für die Bindemittelschicht 36 und weist einen Wert von wenigstens 60 N/5 cm, vorzugsweise 75-100 N/5 cm und darüber auf, d. h. eine derartige Kraft muß wenigstens aufgebracht werden, um zwei mit diesem ersten Bindemittel verbundene Laminatschichten voneinander bzw. die Gewebeschicht von der Keramikschicht zu trennen (Schälfestigkeitsversuch).

Als erstes Bindemittel für die Bindemittelschicht 14 wird vorteilhafterweise ein Bindemittel eingesetzt, das nicht kristallisierend ist und eine hohe Alterungsbeständigkeit aufweist. Besonders bewährt hat sich als Bindemittel für die Bindemittelschicht 14 ein Kleber auf Nitrilkautschukbasis, der nicht zur Kristallisation neigt und eine hervorragende Alterungsbeständigkeit und Feuchtigkeitsfestigkeit aufweist. Andererseits sind natürlich auch andere Kleber geeignet, die diese Anforderungen erfüllen.

Außerdem sind Kleber auf Nitril-Kautschuk-Basis für einen weiten Temperaturbereich mit guter Elastizität und Klebekraft wirksam. Auch ihre gute Beständigkeit gegen die Einwirkung verschiedener Chemikalien ist für die Dauergebrauchseigenschaften der hergestellten Verbundkörper von Vorteil. Die Klebstoffmenge zur Erzielung der gewünschten Schichten- bzw. Lagenhaftung beträgt zwischen Keramik und Aramid-Gewebelage von 180 bis 280 g/m² und zwischen Aramid-Gewebelagen und Laminatpaket von 160 bis 260 g/m².

Durch den Einsatz eines derartigen ersten Bindemittels für die Bindemittelschicht 14 wird sichergestellt, daß die getroffene Kachel 18, 24, 28 mit ihrer zerstörten Restmasse weitgehend am Untergrund haften bleibt und die Delaminierung des Laminatpakets 12, die zum Stoppen der Restenergie des Geschosses oder seiner Bruchstücke notwendig ist, erst bei der zweiten Gewebelage beginnt, sofern die Kacheln, wie in Fig. 1 gezeigt, unmittelbar auf das Laminatpaket 12 aufgebracht worden sind. Als Folge hiervon bleibt auch für nachfolgende Schüsse der Verbundaufbau des Pakets noch weitgehend intakt.

Gemäß einer weiteren bevorzugten Ausführungsform ist nicht nur die Unterseite der Kacheln 18, 24, 28 mit dem ersten Bindemittel versehen. Wie aus Fig. 2 und 3 ersichtlich ist, sind auch die Zwischenräume 38 zwischen den Kacheln 18 mit diesem ersten Bindemittel versehen. Infolge der elastischen Eigenschaften und der Haftfähigkeit können Schubspannungen zwischen den Kacheln aufgefangen und über den elastischen Verbund abgefedert werden. Hierdurch sinkt die Gefahr, daß die Trümmer der getroffenen Kacheln die benachbarten Kacheln ebenfalls zerstoren.

Für die Handhabung der Kachelanordnung und die Aufrechterhaltung der richtigen Positionierung des Gesamtpakets hat es sich als zweckmäßig erwiesen, auf der Oberseite der Kacheln 18, 24, 28 vorübergehend eine Kunststoff-Folie 40 aufzutragen, die vorteilhafterweise als Selbstklebefolie ausgebildet ist. Durch dieses Transport- und Handhabungsmittel wird sichergestellt, daß die einmal gefertigte Kachelanordnung, wie sie beispielsweise in Fig. 5 gezeigt ist, nicht mehr vertauscht werden kann und sich auch nicht mehr gegeneinander verschieben kann.

Des weiteren läßt sich auf diese Weise das gesamte Kachelpaket mittels der Folie 40 auf einen gewölbten Untergrund so auflegen, daß die Zwischenräume 38 zwischen den Kacheln in etwa gleicher Weise geöffnet werden. Anschliessend wird das erste Bindemittel sowohl auf die Unterseite der Kacheln 18, 24, 28 aufgetragen und als auch in die Zwischenräume 38 eingefügt. Hierdurch wird also eine gleichmäßige Dosierung des Klebstoffs in den Zwischenräumen oder Fugen 38 sichergestellt.

Erfindungsgemäß hat es sich als vorteilhaft erwiesen, daß die Zwischenräume 38 höchstens 0,2 mm breit sind. Im allgemeinen ist dieser Zwischenraum höchstens 0,1 mm und ist mit dem Bindemittel weitgehend gefüllt.

Die Klebeverbindung zwischen der Kachelanordnung und der Aramidgewebelage 32 erfolgt zweckmäßigerweise in der Form, daß beide Seiten mit dem Bindemittel versehen werden. Zu diesem Zweck wird das Bindemittel aufgesprüht, aufgestrichen oder aufgewalzt. Üblicherweise werden etwa 150-300, vorzugsweise 200-260 g/m² Bindemittel zwischen der Kachelschicht 16 und dem Laminatpaket 12 bzw. der separaten Gewebelage 42 vorgesehen.

Das in dem Bindemittel enthaltene Lösungsmittel wird zunächst abgetrocknet, bevor die mit dem Bindemittel versehenen Schichten zusammengefügt werden. Zweckmäßigerweise werden die getrockneten Klebeschichten durch Wärme, insbesondere Infrarotstrahlung, aktiviert und anschliessend im heißen Zustand unter Druck zusammengefügt.

Gemäß der in Fig. 1 und 2 gezeigten Ausführungsform ist also das Laminatpaket 12 und die keramische Frontschicht 16 lediglich mit einer Schicht 14 aus erstem Bindemittel verbunden.

Gemäß einer besonders bevorzugten Ausführungsform, die in Fig. 3 gezeigt ist, ist zwischen dem Laminatpaket 12 und der aus den Kacheln 18 bestehenden Frontschicht 16 eine weitere Aramidgewebeschicht 42 vorgesehen, die also nicht zu dem eigentlichen Laminatpaket 12 gehört.

Die in Fig. 3 gezeigte Ausführungsform wird folgendermaßen hergestellt :

Zunächst werden die Unterseite der isolierten Aramidgewebelage 42 und die Oberseite des Laminats 12 mit dem Bindemittel eingestrichen, getrocknet, aktiviert, verklebt und verpreßt. Anschließend werden die Oberseite der Aramidgewebelage 42 und die Unterseite der Kacheln 18 mit dem ersten Bindemittel eingestrichen und auf die vorstehend erwähnte Weise zusammengefügt.

Hierdurch wird eine Verbundanordnung erhalten, bei der außer der Bindemittelschicht 44 zwischen den Kacheln 18 und der Aramidgewebelage 42 die bereits gemäß Fig. 1 und 2 vorgesehene Bindemittelschicht 14 existiert. Demzufolge existieren also zwei Bindemittelschichten 14, 44 aus dem ersten Bindemittel, das gegenüber dem zweiten, in dem Aramidlaminatpaket 12 verwendeten Bindemittel eine erhöhte Haftfestigkeit aufweist. Gemäß dieser Ausführungsform dient also die Aramidgewebelage 42 im wesentlichen als Fixierung der Frontschicht 16, die erfindungsgemäß vorzugsweise aus den Kacheln 18, 24, 28 besteht.

Wie in Fig. 3 dargestellt, ist zur Erzielung einer guten Halteleistung auch noch in der Nähe des Randes des Verbundpaketes 10 eine spezielle Maßnahme getroffen worden, durch die einerseits die Randlagen der Keramikkacheln 18, 24, 26 gegen seitliches Ausbrechen besser geschützt werden und andererseits verhindert wird, daß durch Abtrennung des Laminatpakets 12 ein Geschoß seitlich bzw. schräg nach hinten austritt.

Um diese Nachteile zu vermeiden, ist die Aramidgewebelage 42, welche unmittelbar auf der Unterseite der Keramikkacheln 18 aufgeklebt ist, in ihren Abmessungen so gewählt, daß sie anschließend seitlich die Keramikkachellage (Frontschicht 16) dicht anliegend umgreift und teilweise auf der Oberseite der Frontschicht 16 mit dem ersten Bindemittel aufgeklebt ist. Die Aramidgewebeschicht ist dabei vorteilhafterweise über die unmittelbar am Rand angeordnete Kachel 18 hinweg bis zur zweiten Kachel geführt, wobei sie diese zweite Kachel wenigstens zu etwa einem Viertel bedeckt. Insgesamt ist also bei Kachelmaßen 30 × 40 bzw. 30 × 30 mm die Aramidgewebelage 42 etwa 40-60 mm um den Rand der Frontschicht 16 herumgeführt. Weiterhin werden die Eckverbindungen der umgreifenden Aramidgewebelage 42 so ausgeführt, daß dort zwei Gewebelagen verklebt übereinandergreifen.

Diese Umhüllung erstreckt sich üblicherweise entlang des gesamten Randes der Frontschicht 16. Zu diesem Zweck ist natürlich die Selbstklebefolie entfernt worden, die bis zu dieser Verarbeitungsstufe auf dem Kachelpaket bleibt und dort als Schutz der Kacheloberfläche gegen Staub, Fett, durch Fingerabdrücke u. dgl. dient. Natürlich kann die Aramidgewebelage 42 auch über die gesamte Oberfläche der Frontschicht 16 geführt sein, sofern dies als zweckmäßig erachtet wird.

Gegebenenfalls nach der Herstellung einer faserverstärkten Kunststoffschicht 50 oberhalb des Umlagestreifens bzw. — in der inneren Flächenzone — oberhalb der Keramikoberfläche gemäß Fig. 4 wird als Abschluß des Pakets 10 auf der Oberseite eine weitere Aramid-Gewebelage 52 aufgeklebt, die seitlich zur Rückseite des gesamten Verbundpakets 10 führt und auf der Rückseite des Aramid-Laminat-Pakets vom Rande her ebenfalls 40-80 mm in das Paket 10 hineinragend mittels des ersten Bindemittels festgeklebt wird. Diese doppelte Umfassung der Ränder des Verbundpakets 10 sorgt dafür, daß ein seitliches Wegbrechen der Randkacheln 24, 28 weitgehend verhindert wird und auch die Verbindung zwischen Keramiklage der Frontschicht 16 und Aramid-Laminat-Paket 12 mindestens in der Nachbarschaft der Trefferstelle intakt bleibt und dadurch den seitlichen Geschoßaustritt und insbesondere den Geschoßaustritt nach schräg hinten (der den zu schützenden Menschen treffen könnte) verhindert. Mit dieser Anordnung der Randumfassung werden Geschoßtreffer noch im Randabstand von 15-25 mm mit großer Wahrscheinlichkeit gestoppt; sogar bei einem Randabstand von 8-15 mm wird noch ein erheblicher Teil der Geschosse gehalten. Ohne diese spezielle Randausbildung werden Treffer bis zu 30 mm vom Rand kaum und solche zwischen 30 und 60 mm nur zum Teil aufgehalten. Die auf der Oberseite der Keramik über die Bindemittelschicht 54 aufgeklebte Aramid-Gewebelage 52 vermindert das Wegfliegen der Keramikbruchstucke in der Umgebung der Trefferstelle, so daß die durch einen Treffer im Verbundpaket 10 bewirkte funktionsunfähige Fläche dadurch reduziert wird.

Eine noch bessere Verhinderung des Wegfliegens der Bruchstücke in der Umgebung der Auftreffstelle wird erreicht, wenn nach dem Umkleben des Randes der Keramikschicht mit dem von unten überstehenden Aramidgewebe 42 vor Aufbringung der Aramidgewebelage 52 noch eine Schicht des ersten Bindemittels 49 aufgetragen wird und diese nach restloser Abtrocknung des Lösungsmittels von einer ca. 0,5-1,0 mm dicken Schicht 50 aus faserverstärktem Kunststoff überzogen wird.

Als Kunststoff hierfür kommen Systeme aus Polyester, Epoxy, Phenol- oder Acrylharz sowie auch PUR oder polycarbonat in Frage. Die Faserverstärkung kann aus Glasfaser in Form von Gewebe, Vlies oder Rowing sowie auch aus anderen synthetischen Fasern oder auch aus Aramid-Fasern bestehen. Nach Aushärtung dieser Kunststoff-Schicht 50 wird dann, wie vorstehend beschrieben, die Aramid-Gewebelage 52 mittels des ersten Bindemittels — verzugsweise aus Nitril-Kautschuk — aufgeklebt.

Durch diesen Oberflächenabschluß wird erreicht, daß die Einschußöffnungen kaum noch größere sind als der Geschoßdurchmesser und es bleiben auf diese Weise die Keramikbruchstücke größtenteils im Verbundpaket, so daß sie auch bei einem folgenden Treffer in der Nähe (30-50 mm) des vorherigen sich noch am Haltevorgang beteiligen können.

Die erfindungsgemäßen Verbundpakete 10 weisen im Verhältnis zu ihrer Halteleistung für die verschiedenen Geschosse ein überraschend geringes Gewicht auf, so daß durch die erfindungsgemäßen Maßnahmen in allen Fällen die Keramik-Aramid-Laminat-Verbundpakete Schutzpanzerungen aus Spezialstahl oder anderen Werkstoffen bzw. Werkstoffkombinationen deutlich überlegen sind.

Für diese Verbundpakete ergeben sich vielfältige Einsatzmöglichkeiten. Kleinere Abmessungen bis zu etwa 300 × 450 mm werden — meist der Körperform angepaßt — kurvenförmig als Einschübe im Brust-Rücken- oder Unterleibsbereich von Schutzwesten, z. B. aus Aramidgewebelagen, verwendet, um das Schutzniveau entsprechend zu erhöhen. Dabei bietet z. B. ein Paket mit einem Gewicht von ca. 32 kg/m$^2$, bestehend aus einem Laminat-Paket von 25 Lagen (Aramidgewebe 1 100 dtex) und Al$_2$O$_3$-Kacheln in den Abmessungen 30 × 40 × 6 mm und 30 × 30 × 6 mm, einen wirksamen Schutz gegen Weichkerngewehrmunition des Kalibers 5,56 mm (0,223 inch) bei Beschußabstand von 10 m und einer $v_o$ des Geschosses von 980-1 020 m/s. Auf einer Fläche von z. B. 250 × 300 mm können dabei bis zu 15 Geschosse nacheinander gehalten werden, sofern der Abstand der einzelnen Treffer zu vorherigen Treffern stets wenigstens > 50 mm bleibt.

Eine Verbundplatte mit einem Gewicht von ca. 40 kg/m$^2$, bestehend aus 25 Lagen Aramid-Gewebe-Laminat 1 100 dtex und einer Keramikschicht von 8,0 mm Stärke, hält Geschosse des Kalibers 7,62 × 51 Weichkern im Abstand von 25 m bei einer Geschwindigkeit des Geschosses von 860-880 m/s.

Eine Platte aus 30 Lagen Aramid-Gewebe-Laminat und einer Keramik-stärke von 9,0 mm hält sogar bei einem Gewicht von ca. 46 kg/m$^2$ Hartstahlkerngeschosse des gleichen Kalibers bei gleicher Geschwindigkeit.

Weitere Anwendungen — besonders für Verbundplatten in größeren Abmessungen — sind bei gleicher Halteleistung z. B. Panzerung von Zivilfahrzeugen, Panzerung elektronischen wertvollen Geräts und von Sitzen in Hubschraubern oder anderen Militärfahrzeugen. Auch beim Bau von Bunkern, Panzerwagen, Unterständen oder sonstigen Haltebarrieren können die Verbundplatten alleine für sich oder auch in Kombination vor oder hinter weiteren geschoßhaltenden bzw. -hemmenden Werkstoffen verwendet werden.

Natürlich lassen sich, wenn besonders geringe Trefferabstände gehalten werden sollen, die Verbundplatten in gleicher Weise auch aus der Kombination von Spezialstahl mit einem Aramid-Gewebe-Laminat-Paket — dann jedoch gegenuber Stahl nur noch mit bescheidener Gewichtsersparnis — herstellen.

Umgekehrt werden die geringsten Gewichte im Verhältnis zur Halteleistung erzielt, wenn die verwendete Keramikschicht aus einem einzigen Stück besteht (Monolith-Keramik-Platte). Eine solche Platte hält dann allerdings nur einen einzigen Schuß bzw. einen Folgetreffer nur in einem sehr großen Abstand vom bereits gehaltenen Schuß (> 150 mm).

Erfindungsgemäß wurde also erreicht, daß das Geschoß die erste Aramidgewebeschicht im allgemeinen nicht von der Frontschicht abtrennen kann und als Folge hiervon die Frontschicht für weitere Treffer besser funktionsfähig bleibt. Die Stoppwirkung wird dadurch erreicht, daß die Energie des Geschosses durch Dilatation an den infolge geringerer Haftung delaminierbaren Laminatschichten absorbiert wird (Delamination).

## Patentansprüche

1. Geschoßhemmendes Flächengebilde mit einem textilen Laminat (12), aufweisend eine Vielzahl von Gewebelagen aus Aramidfäden, und mit einer metallischen oder keramischen Frontschicht (16), die mit dem Laminat (12) über eine Schicht aus einem ersten elastischen Bindemittel verbunden ist, wobei die Gewebelagen des Laminats (12) jeweils mit Schichten aus einem zweiten Bindemittel verbunden sind, dadurch gekennzeichnet, daß das erste Bindemittel eine Haftfähigkeit aufweist, die um wenigstens 50 % über der Haftfähigkeit des zweiten Bindemittels liegt und wenigstens 60 N/5 cm beträgt.

2. Flächengebilde nach Anspruch 1, dadurch gekennzeichnet, daß zwischen dem Laminat (12) und der Frontschicht (16) eine Aramidgewebelage vorgesehen ist, die jeweils über eine Bindemittelschicht (44, 14) aus dem ersten Bindemittel mit der Frontschicht (16) und dem Laminat (12) verbunden ist.

3. Flächengebilde nach Anspruch 1 oder 2, dadurch gekennzeichnet, daß die Haftfähigkeit des ersten Bindemittels 75-100 N/5 cm beträgt.

4. Flächengebilde nach einem der Ansprüche 1 bis 3, dadurch gekennzeichnet, daß das erste Bindemittel nicht kristallin ist.

5. Flächengebilde nach einem der Ansprüche 1 bis 4, dadurch gekennzeichnet, daß das erste Bindemittel ein Kleber auf Nitrilkautschukbasis ist.

6. Flächengebilde nach einem der Ansprüche 1 bis 5, dadurch gekennzeichnet, daß die Bindemittelschichten (14, 44) jeweils einen Bindemittelgehalt von 150 bis 300, vorzugsweise 200 bis 260 g/m² erstes Bindemittel aufweisen.

7. Flächengebilde nach einem der Ansprüche 1 bis 6, dadurch gekennzeichnet, daß die Frontschicht (40) vielstückig aus Keramikkacheln, vorzugsweise aus Aluminiumoxid, Siliziumcarbid, Borcarbid, Siliziumnitrid oder Bornitrid aufgebaut ist.

8. Flächengebilde nach einem der Ansprüche 1 bis 7, dadurch gekennzeichnet, daß die Aramidgewebelage (42) um die Frontschicht (40) an den Rändern herumgeführt ist und wenigstens den oberen Randbereich der Frontschicht (16) bedeckt, vorzugsweise bis zur zweiten Kachel der Frontschicht (16) geführt ist.

9. Flächengebilde nach Anspruch 7 oder 8, dadurch gekennzeichnet, daß die Diagonale der Kachel (18, 24) höchstens dem Mindestabstand zwischen zwei zu haltenden Treffern entspricht, wobei die Kacheln (18, 24, 28) im Verbund vorliegen und eine Reihe jeweils 1/1-Kacheln aufweist, während die andere Reihe jeweils im Randbereich zwei 3/4-Kacheln aufweist, an die sich 1/1-Kacheln anschließen.

10. Flächengebilde nach einem der Ansprüche 7 bis 9, dadurch gekennzeichnet, daß in den Zwischenräumen (38) zwischen den Kacheln (18, 24, 28) das erste Bindemittel vorgesehen ist.

11. Flächengebilde nach einem der Ansprüche 7 bis 10, dadurch gekennzeichnet, daß die Kacheln (18, 24, 28) entsprechend der Kontur des Laminats (12) formschlüssig vorliegen.

12. Flächengebilde nach einem der Ansprüche 1 bis 11, dadurch gekennzeichnet, daß die Außenseite der Frontschicht (16) über wenigstens eine Bindemittelschicht (49, 54) aus dem ersten Bindemittel mit einem glasfaserverstärkten Kunststoffüberzug (50) und/oder einer Aramidgewebeschicht (52) verbunden ist.

13. Flächengebilde nach einem der Ansprüche 1 bis 12, dadurch gekennzeichnet, daß das Laminat (12) und die Frontschicht (16) völlig von einer Aramidgewebeschicht (52) umhüllt sind, die mittels des ersten Bindemittels befestigt ist.

## Claims

1. Armour plate with a textile laminate (12), comprising a plurality of fabric layers of aramid yarn and with a metal or ceramic front layer (16), which is connected to the laminate (12) by a layer of a first elastic binding agent, the fabric layers of the laminate (12) each being connected to layers of a second binding agent, characterised in that the first binding agent has adhesive power which is at least 50 % more than the adhesive power of the second binding agent and amounts to at least 60 N/5 cm.

2. Plate according to Claim 1, characterised in that provided between the laminate (12) and the front layer (16) is an aramid fabric layer, which is connected respectively by way of a binding agent layer (44, 14) of the first binding agent to the front layer (16) and the laminate (12).

3. Plate according to Claim 1 or 2, characterised in that the adhesive power of the first binding agent amounts to 75-100 N/5 cm.

4. Plate according to one of Claims 1 to 3, characterised in that the first binding agent is not crystalline.

5. Plate according to one of Claims 1 to 4, characterised in that the first binding agent is an adhesive based on nitrile rubber.

6. Plate according to one of Claims 1 to 5, characterised in that the binding agent layers (14, 44) each have a binding agent content of 150 to 300, preferably 200 to 260 g/m² of the first binding agent.

7. Plate according to one of Claims 1 to 6, characterised in that the front layer (40) is constructed in many pieces from ceramic tiles, preferably of aluminium oxide, silicon carbide, boron carbide, silicone nitride or boron nitride.

8. Plate according to one of Claims 1 to 7, characterised in that the aramid fabric layer (42) is guided around the front layer (40) at the edges and covers at least the upper edge region of the front layer (16), preferably is guided as far as the second tile of the front layer (16).

9. Plate according to Claim 7 or 8, characterised in that the diagonal of the tiles (18, 24) corresponds at most to the minimum spacing between two hits to be arrested, the tiles (18, 24, 28) being present in a composite arrangement and comprising a row of 1/1-tiles, whereas the other row respectively comprises in the edge region two 3/4-tiles, adjoining which are 1/1-tiles.

10. Plate according to one of Claims 7 to 9, characterised in that the first binding agent is provided in the gaps (38) between the tiles (18, 24, 28).

11. Plate according to one of Claims 7 to 10, characterised in that the tiles (18, 24, 28) are provided in a form-locking manner corresponding to the contour of the laminate (12).

12. Plate according to one of Claims 1 to 11, characterised in that the outer side of the front layer (16) is connected by way of at least one binding agent layer (49, 54) of the first binding agent to a glass fibre-reinforced plastics coating (50) and/ or an aramid fabric layer (52).

13. Plate according to one of Claims 1 to 12, characterised in that the laminate (12) and the front layer (16) are completely enclosed by an aramid fabric layer (52), which is attached by means of the first binding agent.

## Revendications

1. Structure plate pour arrêter des projectiles comportant un stratifié textile (12), comprenant un grand nombre d'épaisseurs de tissu en fils d'aramide, et une couche frontale métallique ou céramique (16), qui est reliée au stratifié (12) par l'intermédiaire d'une couche d'un premier liant élastique, les épaisseurs de tissu du stratifié (12) étant reliées chaque fois par des couches d'un second liant, caractérisée en ce que le premier liant présente une adhésivité qui est supérieure d'au moins 50 % à l'adhésivité du second liant et qui vaut au moins 60 N/5 cm.

2. Structure plate suivant la revendication 1, caractérisée en ce qu'entre le stratifié (12) et la couche frontale (16) est prévue une épaisseur de tissu d'aramide, qui est unie chaque fois, par l'intermédiaire d'une couche de liant (44, 14) formée du premier liant, à la couche frontale (16) et au stratifié (12).

3. Structure plate suivant la revendication 1 ou 2, caractérisée en ce que l'adhésivité du premier liant est de 75 à 100 N/5 cm.

4. Structure plate suivant l'une quelconque des revendications 1 à 3, caractérisée en ce que le premier liant n'est pas cristallin.

5. Structure plate suivant l'une quelconque des revendications 1 à 4, caractérisée en ce que le premier liant est une colle à base de caoutchouc nitrile.

6. Structure plate suivant l'une quelconque des revendications 1 à 5, caractérisée en ce que les couches de liant (14, 44) ont chaque fois une teneur en liant de 150 à 300 et de préférence de 200 à 260 g par m² du premier liant.

7. Structure plate suivant l'une quelconque des revendications 1 à 6, caractérisée en ce que la couche frontale (40) est formée en plusieurs pièces à partir de carreaux de céramique, de préférence en oxyde d'aluminium, carbure de silicium, carbure de bore, nitrure de silicium ou nitrure de bore.

8. Structure plate suivant l'une quelconque des revendications 1 à 7, caractérisée en ce que l'épaisseur de tissu d'aramide (42) est appliquée tout autour des bords de la couche frontale (40) et couvre au moins la zone marginale supérieure de la couche frontale (16), de préférence jusqu'au deuxième carreau de la couche frontale (16).

9. Structure plate suivant la revendication 7 ou 8, caractérisée en ce que la diagonale du carreau (18, 24) correspond tout au plus à la distance minimum entre deux projectiles à arrêter, les carreaux (18, 24, 28) étant présents dans le sandwich et une rangée comprenant chaque fois des carreaux 1/1, tandis que l'autre rangée comprend chaque fois deux carreaux 3/4 dans sa zone marginale, puis des carreaux 1/1.

10. Structure plate suivant l'une quelconque des revendications 7 à 9, caractérisée en ce que le premier liant est prévu dans les interstices (38) entre les carreaux (18, 24, 28).

11. Structure plate suivant l'une quelconque des revendications 7 à 10, caractérisée en ce que les carreaux (18, 24, 28) sont agencés de manière à épouser de façon correspondante la forme du profil du stratifié (12).

12. Structure plate suivant l'une quelconque des revendications 1 à 11, caractérisée en ce que le côté extérieur de la couche frontale (16) est uni, par l'intermédiaire d'au moins une couche de liant (49, 54) formée du premier liant, à un revêtement plastique renforcée par des fibres de verre (50) et/ou à une couche de tissu d'aramide (52).

13. Structure plate suivant l'une quelconque des revendications 1 à 12, caractérisée en ce que le stratifié (12) et la couche frontale (16) sont entourés complètement par une couche de tissu d'aramide (52) qui est fixée au moyen du premier liant.

Fig. 1

Fig. 2

Fig. 3

52

54
50
49

18

44
42

12

Fig. 4

Fig. 5

24

22

20

30

26

24

28